(19) 

Europäisches
Patentamt

European
Patent Office

Office européen
des brevets

(11) **EP 4 776 356 A1**

(12) **EUROPEAN PATENT APPLICATION**
published in accordance with Art. 153(4) EPC

(43) Date of publication:
**15.07.2026 Bulletin 2026/29**

(21) Application number: **25849992.0**

(22) Date of filing: **11.04.2025**

(51) International Patent Classification (IPC):
*H01M 8/2484* [(2016.01)]    *H01M 8/2457* [(2016.01)]
*H01M 8/249* [(2016.01)]

(52) Cooperative Patent Classification (CPC):
Y02E 60/50

(86) International application number:
**PCT/CN2025/088538**

(87) International publication number:
**WO 2026/031622 (12.02.2026 Gazette 2026/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.08.2024 CN 202411077965**

(71) Applicant: **Chaozhou Three-Circle (Group) Co.,
Ltd.
Chaozhou, Guangdong 515646 (CN)**

(72) Inventors:
• **CHEN, Shuoshuo**
  **Chaozhou, Guangdong 515646 (CN)**
• **QIU, Jihua**
  **Chaozhou, Guangdong 515646 (CN)**

(74) Representative: **Porta & Consulenti Associati
S.p.A.
Via Winckelmann, 1
20146 Milano (IT)**

(54) **CELL STACK HAVING MULTI-CASCADE STRUCTURE, AND FUEL CELL SYSTEM**

(57) Disclosed in the present application are a cell stack having a multi-cascade structure, and a fuel cell system. The cell stack comprises a plurality of stages of cell arrays connected in series, first fuel flow paths and second fuel flow paths, wherein each stage of cell array comprises a plurality of single cells connected in parallel; the respective stages of cell arrays are in communication by means of the first fuel flow paths; the single cells in the same stage of cell array are in communication by means of the second fuel flow paths; and the number of single cells in each stage of cell array and an array fuel utilization rate corresponding to each stage of cell array meet a first single-cell number constraint condition, and the number of single cells in preceding and subsequent stages of cell arrays and a cell fuel utilization rate corresponding to each single cell in the preceding stage of cell array meet a second single-cell number constraint condition, such that the hydrogen-equivalent amount of fuel introduced into each single cell per unit time is equal. The present application can realize the recycling of fuel, and improve the fuel utilization rate and the power generation efficiency; moreover, the present application can reduce the risk of over-utilization of single cells and cell stacks, and can be widely used in the field of fuel cells.

FIG. 1

EP 4 776 356 A1

### Description

### TECHNICAL FIELD

The present disclosure relates to the field of fuel cells, and more particularly to a multi-stage stack and fuel cell system.

### BACKGROUND

A fuel cell is an electrochemical device that can directly convert chemical energy stored in fuel and oxidant into electrical energy. Fuel cells are typically implemented as individual cells that are stacked together to form a fuel cell stack. One or more stacks and other modules such as a gas management module, a water treatment module, a power management module, and a main control module constitute a fuel cell system.

To improve the power output, power generation efficiency, and fuel utilization of fuel cell systems and stacks, a plurality of stacks or a plurality of individual cells are usually connected in series and/or in parallel. However, conventional fuel cell system and stack designs often suffer from an imbalance in the number of stacks and the number of individual cells, leading to a decrease in the overall fuel utilization of the fuel cell system and the stack.

### SUMMARY

To solve the above technical problems, an objective of the present disclosure is to provide a multi-stage stack and a multi-stage fuel cell system with high fuel utilization.

To achieve the above objective, in accordance with a first aspect of the present disclosure, an embodiment provides a multi-stage stack, including: a plurality of cell arrays connected in series, first fuel channels, and second fuel channels, where each of the plurality of cell arrays includes a plurality of cells connected in parallel, the plurality of cell arrays are in communication with each other through the respective first fuel channels, and the cells in a same cell array are connected through the respective second fuel channels; and where a number of cells in each cell array and an array fuel utilization rate corresponding to each cell array satisfy a first cell number constraint condition, a number of cells in each of two adjacent cell arrays and a cell fuel utilization rate corresponding to each cell in an upstream one of the two adjacent cell arrays satisfy a second cell number constraint condition, such that during stable operation of the stack, a hydrogen-equivalent amount of fuel introduced per unit time to each cell is equal.

In some embodiments, the number of cells in each cell array and the array fuel utilization rate corresponding to each cell array satisfy the first cell number constraint condition, and the first cell number constraint condition is expressed as:

$$N_x = N_1 \times \prod_{i=1}^{x-1} (1 - \eta_i)$$

where $N_x$ represents a number of cells in a $C_x{}^{th}$ cell array, $N_1$ represents a number of cells in a $C_1{}^{th}$ cell array, $\eta_i$ represents an array fuel utilization rate corresponding to the $C_i{}^{th}$ cell array, $i$ and $x$ are positive integers, and $i \in [1, x - 1]$.

In some embodiments, the number of cells in each of the two adjacent cell arrays and the cell fuel utilization rate corresponding to each cell in the upstream one of the two adjacent cell arrays satisfy the second cell number constraint condition, and the second cell number constraint condition is expressed as:

$$N_x = N_{x-1} - \sum_{i=1}^{N_{x-1}} \gamma_i$$

where $Nx$ represents a number of cells in a $C_x{}^{th}$ cell array, $N_{x-1}$ represents a number of cells in a $C_{x-1}{}^{th}$ cell array, $\gamma_i$ represents a cell fuel utilization rate corresponding to an $i^{th}$ cell in the $C_{x-1}{}^{th}$ cell array, $i$ and $x$ are positive integers, and $i \in [1, N_{x-1}]$.

In some embodiments, the stack fuel utilization rate corresponding to the stack and an array fuel utilization rate corresponding to each cell array satisfy a stack fuel utilization rate constraint condition, and the stack fuel utilization rate constraint condition is expressed as:

$$\eta_{stack} = \frac{\sum_{i=1}^{x} N_i \times \eta_i}{\sum_{i=1}^{x} N_i}$$

where $\eta_{stack}$ represents the stack fuel utilization rate, $N_i$ represents a number of cells in a $C_i^{th}$ cell array, $\eta_i$ represents the array fuel utilization rate corresponding to the $C_i^{th}$ cell array, $i$ and $x$ are positive integers, and $i \in [1, x]$.

In some embodiments, the stack fuel utilization rate satisfies $60\% \leq \eta_{stack} \leq 99\%$ or $70\% \leq \eta_{stack} \leq 95\%$, and the array fuel utilization rate corresponding to each cell array satisfies $30\% \leq \eta_x \leq 75\%$ or $50\% \leq \eta_x \leq 75\%$, where $\eta_x$ represents the array fuel utilization rate corresponding to a $C_x^{th}$ cell array, and $x$ is a positive integer.

In some embodiments, the number of cells in each cell array satisfies a third cell number constraint condition, and the third cell number constraint condition is:

when the stack includes a first-stage cell array and a second-stage cell array connected in series, a number of cells in the first-stage cell array and a number of cells in the second-stage cell array satisfy $N_1 : N_2$ being equal to one of 2:1, 3:1, 42:13, 39:12, or 4:1, where $N_1$ represents the number of cells in the first-stage cell array, and $N_2$ represents the number of cells in the second-stage cell array; or

when the stack includes a first-stage cell array, a second-stage cell array, and a third-stage cell array connected in series, a number of cells in the first-stage cell array, a number of cells in the second-stage cell array, and a number of cells in the third-stage cell array satisfy $N_1 : N_2 : N_3$ being equal to one of 9:3:1, 39:12:4, or 42:13:4, where $N_1$ represents the number of cells in the first-stage cell array, $N_2$ represents the number of cells in the second-stage cell array, and $N_3$ represents the number of cells in the third-stage cell array.

To achieve the above objective, in accordance with a second aspect of the present disclosure, an embodiment provides a multi-stage fuel cell system, including a plurality of stack groups connected in series, third fuel channels, and fourth fuel channels, where each of the plurality of stack groups includes a plurality of stacks connected in parallel, the stacks are as described in the embodiment of the first aspect, the plurality of stack groups are in communication with each other through the respective third fuel channels, and the stacks in a same stack group are connected through the respective fourth fuel channels; and where a number of stacks in each stack group and a stack group fuel utilization rate corresponding to each stack group satisfy a first stack number constraint condition, a number of stacks in each of two adjacent stack groups and a stack fuel utilization rate corresponding to each stack in an upstream one of the two adjacent stack groups satisfy a second stack number constraint condition, such that during stable operation of the fuel cell system, a hydrogen-equivalent amount of fuel introduced per unit time to each stack is equal.

In some embodiments, the number of stacks in each stack group and the stack group fuel utilization rate corresponding to each stack group satisfy the first stack number constraint condition, and the first stack number constraint condition is expressed as:

$$M_y = M_1 \times \prod_{j=1}^{y-1} \left(1 - \mu_j\right)$$

where $M_y$ represents a number of stacks in a $D_y^{th}$ stack group, $M_1$ represents a number of stacks in a $D_1^{th}$ stack group, $\mu_j$ represents a stack group fuel utilization rate corresponding to the $D_j^{th}$ stack group, $j$ and $y$ are positive integers, and $j \in [1, y-1]$.

In some embodiments, the number of stacks in each of the two adjacent stack groups and the stack fuel utilization rate corresponding to each stack in the upstream one of the two adjacent stack groups satisfy the second stack number constraint condition, and the second stack number constraint condition is expressed as:

$$M_y = M_{y-1} - \sum_{j=1}^{M_{y-1}} \delta_j$$

where $M_y$ represents a number of stacks in a $D_y^{th}$ stack group, $M_{y-1}$ represents a number of stacks in a $D_{y-1}^{th}$ stack group, $\delta_j$ represents a stack fuel utilization rate corresponding to a $j^{th}$ stack in the $D_{y-1}^{th}$ stack group, $j$ and $y$ are positive integers, and $j \in [1, M_{y-1}]$.

In some embodiments, a system fuel utilization rate corresponding to the fuel cell system and the stack group fuel utilization rate corresponding to each stack group satisfy a system fuel utilization rate constraint condition, and the system fuel utilization rate constraint condition is expressed as:

$$\mu_{Total} = \frac{\sum\limits_{j=1}^{y} M_j \times \mu_j}{\sum\limits_{j=1}^{y} M_j}$$

where $\mu_{Total}$ represents the system fuel utilization rate, $M_j$ represents a number of stacks in a $D_j^{th}$ stack group, $\mu_j$ represents the stack group fuel utilization rate corresponding to the $D_j^{th}$ stack group, $j$ and y are positive integers, and $j \in [1, y]$.

In some embodiments, the system fuel utilization rate satisfies $60\% \le \mu_{Total} \le 99\%$ or $70\% \le \mu_{Total} \le 95\%$, and the stack group fuel utilization rate corresponding to each stack group satisfies $30\% \le \mu_y \le 75\%$ or $50\% \le \mu_y \le 75\%$, where $\mu_y$ represents the stack group fuel utilization rate corresponding to a $D_y^{th}$ stack group, and y is a positive integer.

In some embodiments, the number of stacks in each stack group satisfies a third stack number constraint condition, and the third stack number constraint condition is:

when the multi-stage fuel cell system includes a first-stage stack group and a second-stage stack group connected in series, a number of stacks in the first-stage stack group and a number of stacks in the second-stage stack group satisfy $M_1 : M_2$ being equal to one of 2:1, 3:1, 42:13, 39:12, or 4:1, where $M_1$ represents the number of stacks in the first-stage stack group, and $M_2$ represents the number of stacks in the second-stage stack group; or

when the multi-stage fuel cell system includes a first-stage stack group, a second-stage stack group, and a third-stage stack group connected in series, a number of stacks in the first-stage stack group, a number of stacks in the second-stage stack group, and a number of stacks in the third-stage stack group satisfy $M_1 : M_2 : M_3$ being equal to one of 9:3:1, 39:12:4, or 42:13:4, where $M_1$ represents the number of stacks in the first-stage stack group, $M_2$ represents the number of stacks in the second-stage stack group, and $M_3$ represents the number of stacks in the third-stage stack group.

The present disclosure has the following advantages. In the multi-stage stack provided by the present disclosure, second fuel channels of a plurality of cells are connected in parallel to form a cell array, and first fuel channels of a plurality of cell arrays are connected in series to form the stack, so that fuel exhaust gas discharged from an upstream stage flows into a downstream stage for reaction, thereby realizing the recycling of fuel, and improving the fuel utilization rate and the power generation efficiency. In addition, the number of cells is specified using the cell number constraint conditions, to ensure that the hydrogen-equivalent amount of fuel introduced per unit time to each cell in the stack is equal, thereby reducing the risk of over-utilization of individual cells and improving the stability and reliability of operation of the stack while effectively improving the fuel utilization rate and the power generation efficiency.

In the multi-stage fuel cell system provided by the present disclosure, fourth fuel channels of a plurality of stacks are connected in parallel to form a stack group, and third fuel channels of a plurality of stack groups are connected in series to form the fuel cell system, so that fuel exhaust gas discharged from an upstream stage flows into a downstream stage for reaction, thereby realizing the recycling of fuel, and improving the fuel utilization rate and the power generation efficiency. In addition, the number of stacks is specified using the stack number constraint conditions, to ensure that the hydrogen-equivalent amount of fuel introduced per unit time to each stack in the fuel cell system is equal, thereby reducing the risk of over-utilization of individual stacks and improving the stability and reliability of operation of the system while effectively improving the fuel utilization rate and the power generation efficiency.

**BRIEF DESCRIPTION OF DRAWINGS**

To more clearly explain the technical schemes in the embodiments of the present disclosure, the accompanying drawings required for describing the embodiments of the present disclosure are described below. It should be understood that the drawings described below are merely for the convenience of clearly describing some embodiments of the technical schemes of the present disclosure. Those skilled in the art can also obtain other drawings based on these drawings without creative efforts.

FIG. 1 is a schematic structural diagram of a multi-stage stack according to an embodiment of the present disclosure; and

FIG. 2 is a schematic structural diagram of a multi-stage fuel cell system according to an embodiment of the present disclosure.

## DETAILED DESCRIPTION

To make the objectives, technical schemes and advantages of the present disclosure clearer, the present disclosure is described in further detail below with reference to the accompanying drawings and embodiments. It should be understood that the specific embodiments described herein are merely used to illustrate the present disclosure and are not intended to limit the present disclosure. In the following description, when referring to the accompanying drawings, the same numerals in different drawings represent the same or similar elements unless otherwise indicated. The implementations described in the following exemplary embodiments do not represent all implementations consistent with the embodiments of the present disclosure. They are merely examples of apparatuses and methods consistent with some aspects of the embodiments of the present disclosure as recited in the appended claims.

It can be understood that the terms "first," "second," and the like used in the present disclosure may be used herein to describe various concepts, but unless otherwise specified, these concepts are not limited by these terms. These terms are only used to distinguish one concept from another. For example, without departing from the scope of the embodiments of the present disclosure, first information may also be referred to as second information, and similarly, second information may also be referred to as first information. Depending on the context, the words "if" and "when" as used herein may be interpreted as "at the time of" or "upon" or "in response to determining".

The terms "at least one," "a plurality of," "each," "anyone" and the like used in the present disclosure are defined as follows: at least one includes one, two or more than two; a plurality of includes two or more than two; each refers to every one in the corresponding plurality; any one refers to any one in the plurality.

A fuel cell is an electrochemical device that can directly convert chemical energy stored in fuel and oxidant into electrical energy. Fuel cells are typically implemented as individual cells that are stacked together to form a fuel cell stack. One or more stacks and other modules such as a gas management module, a water treatment module, a power management module, and a main control module constitute a fuel cell system.

To improve the power output, power generation efficiency, and fuel utilization of fuel cell systems and stacks, a plurality of stacks or a plurality of individual cells are usually connected in series and/or in parallel. However, conventional fuel cell system and stack designs often suffer from an imbalance in the number of stacks and the number of individual cells, leading to a decrease in the overall fuel utilization of the fuel cell system and the stack.

Therefore, an embodiment of the present disclosure provides a multi-stage stack, in which second fuel channels of a plurality of cells are connected in parallel to form a cell array, and first fuel channels of a plurality of cell arrays are connected in series to form a stack, so that fuel exhaust gas discharged from an upstream stage flows into a downstream stage for reaction, thereby realizing the recycling of fuel, and improving the fuel utilization rate and the power generation efficiency. In addition, the number of cells is specified using the cell number constraint conditions, to ensure that a hydrogen-equivalent amount of fuel introduced per unit time to each cell in the stack is equal, thereby reducing the risk of over-utilization of individual cells and improving the stability and reliability of operation of the stack while effectively improving the fuel utilization rate and the power generation efficiency.

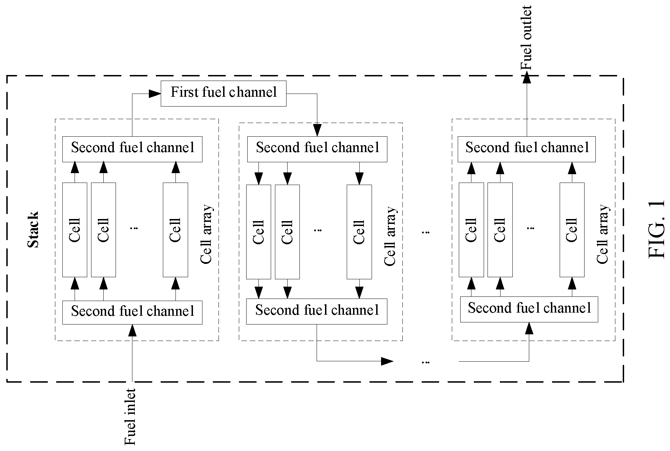

FIG. 1 is a schematic structural diagram of a multi-stage stack according to an embodiment of the present disclosure. With reference to FIG. 1, the multi-stage stack provided in the embodiment of the present disclosure includes a plurality of cell arrays connected in series, first fuel channels, and second fuel channels. Each of the plurality of cell arrays includes a plurality of cells connected in parallel, the plurality of cell arrays are in communication with each other through the respective first fuel channels. The cells in the same cell array are connected through the respective second fuel channels. A number of cells in each cell array and an array fuel utilization rate corresponding to each cell array satisfy a first cell number constraint condition. A number of cells in each of two adjacent cell arrays and a cell fuel utilization rate corresponding to each cell in an upstream one of the two adjacent cell arrays satisfy a second cell number constraint condition. During stable operation of the stack, a hydrogen-equivalent amount of fuel introduced per unit time to each cell in the stack is equal.

It should be noted that the expression "the hydrogen-equivalent amount $A_0$ of fuel introduced per unit time is equal" means that the amount of fuel introduced per cell per unit time converted to an equivalent amount of hydrogen gas in moles is equal. In addition, an arithmetic mean of the hydrogen-equivalent amounts of fuel introduced to the cells is defined as A, and if a difference between the hydrogen-equivalent amount of fuel introduced to a cell and the arithmetic mean A is within $\pm 5\%$, it may also be considered that the hydrogen-equivalent amount $A_0$ of fuel introduced to the cell is equal to the hydrogen-equivalent amounts $A_0$ of fuel introduced to the other cells.

The stack is determined to operate stably when the array fuel utilization rate corresponding to the first-stage cell array is greater than or equal to 50%.

For example, the stack in the embodiment of the present disclosure includes a plurality of cell arrays $C_1$, $C_2$ to $Cx$, respectively including $N_1$, $N_2$ to $Nx$ cells, where $N_1 > N_2 > ... > N_x$, and $N_1$, $N_2$ to $Nx$ are all positive integers, and $x \geq 2$.

Fuel gas is introduced into the cell arrays in series, and is introduced into the cells in each cell array in parallel, so that the remaining fuel gas after reaction in an upstream cell array flows into a downstream cell array for reaction. Two adjacent cell arrays $C_{x-1}$ and $Cx$ are in fuel communication with each other through the respective first fuel channels. Fuel outlets of the cells in the cell array $C_{x-1}$ are in communication with the first fuel channel through fuel exhaust branch pipes, so that fuel exhaust gas of the cells in the upstream cell array merges in the first fuel channel. Fuel inlets of the cells in the cell array $C_x$ are in communication with the first fuel channel through fuel inlet branch pipes, so that fuel in the first fuel channel is distributed into the cells in the downstream cell array.

Further, as an optional implementation, the number of cells in each cell array and the array fuel utilization rate corresponding to each cell array satisfy the first cell number constraint condition, and the first cell number constraint condition is expressed as:

$$N_x = N_1 \times \prod_{i=1}^{x-1} (1 - \eta_i)$$

where $N_x$ represents a number of cells in a $C_x{}^{th}$ cell array, $N_1$ represents a number of cells in a $C_1{}^{th}$ cell array, $\eta_i$ represents an array fuel utilization rate corresponding to the $C_i{}^{th}$ cell array, $i$ and $x$ are positive integers, and $i \in [1, x\text{-}1]$.

Assuming that the array fuel utilization rates corresponding to the cell arrays $C_1$, $C_2$ to $C_x$ are respectively $\eta_1, \eta_1$ to $\eta_x$, the number $N_x$ of cells in the $C_x{}^{th}$ cell array satisfies the following formula:

$$N_x = N_{x\text{-}1} \times (1 - \eta_{x\text{-}1})$$

According to the above formula, it can be further obtained that the number $N_x$ of cells in the $C_x{}^{th}$ cell array satisfies the following formula (i.e., the first cell number constraint condition):

$$N_x = N_1 \times \prod_{i=1}^{x-1} (1 - \eta_i)$$

It should be noted that in the embodiment of the present disclosure, the design of the array fuel utilization rates of the cell arrays to satisfy the first cell number constraint condition can automatically ensure that, during normal operation of the stack, the hydrogen-equivalent amount $A_0$ of fuel introduced per unit time to each cell in each cell array is equal, without requiring flow control using an active device.

Further, as an optional implementation, the number of cells in each of the two adjacent cell arrays and the cell fuel utilization rate corresponding to each cell in the upstream one of the two adjacent cell arrays satisfy the second cell number constraint condition, and the second cell number constraint condition is expressed as:

$$N_x = N_{x-1} - \sum_{i=1}^{N_{x-1}} \gamma_i$$

where $Nx$ represents a number of cells in a $C_x{}^{th}$ cell array, $N_{x-1}$ represents a number of cells in a $C_{x-1}{}^{th}$ cell array, $\gamma_i$ represents a cell fuel utilization rate corresponding to an $i^{th}$ cell in the $C_{x-1}{}^{th}$ cell array, $i$ and $x$ are positive integers, and $i \in [1, N_{x-1}]$.

Assuming that the $C_{x-1}{}^{th}$ cell array includes $N_{x-1}$ cells, the fuel utilization rates corresponding to the cells are respectively defined as $\gamma_1, \gamma_2$, to $\gamma^{(Nx-1)}$, and the $C_x{}^{th}$ cell array includes $N_x$ cells, $N_x$ satisfies the following formula (i.e., the second cell number constraint condition):

$$N_x = N_{x-1} - \sum_{i=1}^{N_{x-1}} \gamma_i$$

It should be noted that in the embodiment of the present disclosure, the design of the numbers of cells in two adjacent cell arrays and the cell fuel utilization rates of the cells in the upstream one of the two adjacent cell arrays to satisfy the second cell number constraint condition can automatically ensure that, during normal operation of the stack, the

hydrogen-equivalent amount $A_0$ of fuel introduced per unit time to each cell in each cell array is equal, without requiring flow control using an active device.

Further, as an optional implementation, the stack fuel utilization rate corresponding to the stack and an array fuel utilization rate corresponding to each cell array satisfy a stack fuel utilization rate constraint condition, and the stack fuel utilization rate constraint condition is expressed as:

$$\eta_{stack} = \frac{\sum_{i=1}^{x} N_i \times \eta_i}{\sum_{i=1}^{x} N_i}$$

where $\eta_{stack}$ represents the stack fuel utilization rate, $N_i$ represents a number of cells in a $C_i^{th}$ cell array, $\eta_i$ represents the array fuel utilization rate corresponding to the $C_i^{th}$ cell array, $i$ and $x$ are positive integers, and $i$ E [1, $x$].

Assuming that the stack fuel utilization rate corresponding to the stack is defined as $\eta_{stack}$, and the array fuel utilization rates corresponding to the cell arrays $C_1$, $C_2$ to $C_x$ are respectively defined as $\eta_1$, $\eta_1$ to $\eta_x$, the stack fuel utilization rate $\eta_{stack}$ satisfies the following formula (i.e., the stack fuel utilization rate constraint condition):

$$\eta_{stack} = \frac{\sum_{i=1}^{x} N_i \times \eta_i}{\sum_{i=1}^{x} N_i}$$

It should be noted that when the stack fuel utilization rate corresponding to the stack and the array fuel utilization rates of the cell arrays satisfy the stack fuel utilization rate constraint condition, it can be ensured that the cells in the cell arrays will not be overloaded, thereby prolonging the service life of the cells, and maintaining a high utilization rate of the entire stack.

Further, as an optional implementation, the stack fuel utilization rate satisfies $60\% \leq \eta_{stack} \leq 99\%$ or $70\% \leq \eta_{stack} \leq 95\%$, and the array fuel utilization rate corresponding to each cell array satisfies $30\% \leq \eta_x \leq 75\%$ or $50\% \leq \eta_x \leq 75\%$, where $\eta_x$ represents the array fuel utilization rate corresponding to a $C_x^{th}$ cell array, and x is a positive integer.

For example, the stack fuel utilization rate corresponding to the stack is set to satisfy $60\% \leq \eta_{stack} \leq 99\%$ or $70\% \leq n_{stack} \leq 95\%$ so as to maximize the utilization of fuel within a range in which the stack can operate stably and reduce the fuel consumption costs; and the array fuel utilization rates corresponding to the cell arrays are set to satisfy $30\% \leq \eta_x \leq 75\%$ or $50\% \leq \eta_x \leq 75\%$, so as to optimize the allocation of the fuel utilization rates of the cell arrays and improve the total fuel utilization rate and performance of the entire stack.

It can be understood by those skilled in the art that the ranges specified for the stack fuel utilization rate and the array fuel utilization rates corresponding to the cell arrays can also be selected according to practical requirements.

Further, as an optional implementation, the number of cells in each cell array satisfies a third cell number constraint condition, and the third cell number constraint condition is:

when the stack includes a first-stage cell array and a second-stage cell array connected in series, a number of cells in the first-stage cell array and a number of cells in the second-stage cell array satisfy $N_1 : N_2$ being equal to one of 2:1, 3:1, 42:13, 39:12, or 4:1, where $N_1$ represents the number of cells in the first-stage cell array, and $N_2$ represents the number of cells in the second-stage cell array; or
when the stack includes a first-stage cell array, a second-stage cell array, and a third-stage cell array connected in series, a number of cells in the first-stage cell array, a number of cells in the second-stage cell array, and a number of cells in the third-stage cell array satisfy $N_1 : N_2 : N_3$ being equal to one of 9:3:1, 39:12:4, or 42:13:4, where $N_1$ represents the number of cells in the first-stage cell array, $N_2$ represents the number of cells in the second-stage cell array, and $N_3$ represents the number of cells in the third-stage cell array.

Optionally, the stack in the embodiment of the present disclosure further includes a fuel replenishment channel arranged on the first fuel channel between two adjacent cell arrays. When there is a fluctuation or failure in the operation of the stack, and the remaining fuel discharged from an upstream cell array cannot meet a requirement for ensuring that "when the hydrogen-equivalent amount $A_0$ of fuel introduced per unit time to each cell is equal" in a downstream cell array, the remaining fuel discharged from the upstream cell array can be mixed with supplemental fuel through the fuel replenishment channel and then flows together with the supplemental fuel into the downstream cell array.

Assuming that two adjacent cell arrays are respectively $C_{x-1}$ and $C_x$, it can be determined based on the following formula whether supplemental fuel needs to be added to the $C_x{}^{th}$ cell array. When the following formula is satisfied, supplemental fuel is introduced to the fuel replenishment channel between the two cell arrays $C_{x-1}$ and $C_x$ through control by the fuel cell system, and the supplemental fuel flows into the cell array $C_x$ together with the remaining fuel discharged from the cell array $C_{x-1}$.

$$N_x > N_{x-1} \times (1 - \eta_{x-1})$$

where $\eta_{x-1}$ represents the array fuel utilization rate corresponding to the cell array $C_{x-1}$.

Further, assuming that the array fuel utilization rates corresponding to the cell arrays $C_1$, $C_2$ to $Cx$ are respectively $\eta_1$, $\eta_1$, to $\eta_x$, the number $N_x$ of cells in the $C_x{}^{th}$ cell array satisfies the following formula:

$$N_x = N_{x-1} \times (1 - \eta_{x-1}) + \frac{Q_{x-1}}{A_0}$$

where $Q_{x-1}$ represents a hydrogen-equivalent amount of supplementary fuel introduced between the two adjacent cell arrays $C_{x-1}$ and $C_x$ per unit time.

When $x \geq 3$, the above formula is transformed, and the number $N_x$ of cells in the $C_x{}^{th}$ cell array satisfies the following formula:

$$N_x = \left[ N_1 \times \prod_{i=1}^{x-1} (1 - \eta_i) \right] + \left\{ \sum_{i=1}^{x-2} \left[ \frac{Q_i}{A_0} \times \prod_{k=i+1}^{x-1} (1 - \eta_k) \right] \right\} + \frac{Q_{x-1}}{A_0}$$

where $Q_i$ represents a hydrogen-equivalent amount of supplementary fuel introduced between the two adjacent cell arrays $C_i$ and $C_{i+1}$ per unit time, $i$ and $k$ are positive integers, $i \in [1, x-1]$, and $k \in [2, x-1]$.

When $x=2$, $x=2$ is substituted into the above formula, and the number $N_2$ of cells in the $C_2{}^{th}$ cell array satisfies the following formula:

$$N_2 = N_1 \times (1 - \eta_1) + \frac{Q_1}{A_0}$$

where $Q_1$ represents a hydrogen-equivalent amount of supplementary fuel introduced between the two adjacent cell arrays $C_1$ and $C_2$ per unit time.

It should be noted that when the stack needs to be replenished with fuel, the design of the numbers of cells in two adjacent cell arrays, the array fuel utilization rates of the upstream one of the two adjacent cell arrays, and the hydrogen-equivalent amount of supplemental fuel to be introduced between the two adjacent cell arrays to satisfy the above formulas can automatically ensure that, during abnormal operation of the stack, the hydrogen-equivalent amount $A_0$ of fuel introduced per unit time to each cell in each cell array is equal, without requiring flow control using an active device.

Further, the hydrogen-equivalent amount $Q_i$ of the supplementary fuel satisfies the following formula (preferably, the formula is an equation):

$$Q_i \geq A_0 \times \left[ N_{i+1} - N_i \times (1 - \eta_i) \right]$$

Further, assuming that the $C_{x-1}{}^{th}$ cell array includes $N_{x-1}$ cells, and the cell fuel utilization rates corresponding to the cells are respectively defined as $\gamma_1$, $\gamma_2$ to $\gamma^{(Nx-1)}$, the $C_x{}^{th}$ cell array includes $N_x$ cells, the number $N_x$ of cells in the $C_x{}^{th}$ cell array satisfies the following formula:

$$N_x = \frac{Q_{x-1}}{A_0} + N_{x-1} - \sum_{i=1}^{Nx-1} \gamma_i$$

**EP 4 776 356 A1**

It should be noted that when the system needs to be replenished with fuel, the design of the numbers of cells in two adjacent cell arrays, the cell fuel utilization rates of the cells in the upstream one of the two adjacent cell arrays, and the hydrogen-equivalent amount of supplemental fuel to be introduced between the two adjacent cell arrays to satisfy the above formulas can automatically ensure that, during abnormal operation of the stack, the hydrogen-equivalent amount $A_0$ of fuel introduced per unit time to each cell in each cell array is qual, without requiring flow control using an active device.

The stack of the embodiment of the present disclosure has been described above. It can be seen that compared with stacks in the prior art, in the present disclosure, second fuel channels of a plurality of cells are connected in parallel to form a cell array, and first fuel channels of a plurality of cell arrays are connected in series to form the stack, so that fuel exhaust gas discharged from an upstream stage flows into a downstream stage for reaction, thereby realizing the recycling of fuel, and improving the fuel utilization rate and the power generation efficiency. In addition, it is specified that the hydrogen-equivalent amount of fuel introduced per unit time to each cell is equal, thereby reducing the risk of over-utilization of individual cells and improving the stability and reliability of operation of the stack while effectively improving the fuel utilization rate and the power generation efficiency.

An embodiment of the present disclosure further provides a multi-stage fuel cell system, in which fourth fuel channels of a plurality of stacks are connected in parallel to form a stack group, and third fuel channels of a plurality of stack groups are connected in series to form the fuel cell system, so that fuel exhaust gas discharged from an upstream stage flows into a downstream stage for reaction, thereby realizing the recycling of fuel, and improving the fuel utilization rate and the power generation efficiency. In addition, the number of stacks is specified using the stack number constraint conditions, to ensure that the hydrogen-equivalent amount of fuel introduced per unit time to each stack in the fuel cell system is equal, thereby reducing the risk of over-utilization of individual stacks and improving the stability and reliability of operation of the system while effectively improving the fuel utilization rate and the power generation efficiency.

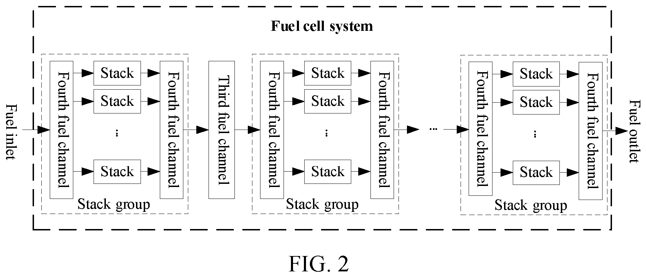

FIG. 2 is a schematic structural diagram of a multi-stage fuel cell system according to an embodiment of the present disclosure. Referring to FIG. 2, the multi-stage fuel cell system provided in the embodiment of the present disclosure includes a plurality of stack groups connected in series, third fuel channels, and fourth fuel channels. Each of the plurality of stack groups includes a plurality of stacks connected in parallel. The plurality of stack groups are in communication with each other through the respective third fuel channels. The stacks in the same stack group are connected through the respective fourth fuel channels. A number of stacks in each stack group and a stack group fuel utilization rate corresponding to each stack group satisfy a first stack number constraint condition. A number of stacks in each of two adjacent stack groups and a stack fuel utilization rate corresponding to each stack in the upstream one of the two adjacent stack groups satisfy a second stack number constraint condition. The hydrogen-equivalent amount of fuel introduced per unit time to each stack is equal during stable operation of the fuel cell system.

It should be noted that the expression "the hydrogen-equivalent amount $A_0$ of fuel introduced per unit time is equal" means that the amount of fuel introduced per stack per unit time converted to an equivalent amount of hydrogen gas in moles is equal. In addition, an arithmetic mean of the hydrogen-equivalent amounts of fuel introduced to the stacks is defined as A, and if a difference between the hydrogen-equivalent amount of fuel introduced to a stack and the arithmetic mean A is within +5%, it may also be considered that the hydrogen-equivalent amount $A_0$ of fuel introduced to the stack is equal to the hydrogen-equivalent amounts $A_0$ of fuel introduced to the other stacks.

The fuel cell system is determined to operate stably when the stack group fuel utilization rate corresponding to the first-stage stack group is greater than or equal to 50%.

For example, the fuel cell system in the embodiment of the present disclosure includes a plurality of stack groups $D_1, D_2$ to $D_y$, respectively including , $M_2$ to $M_y$ stacks, where $M_1 > M_2 > ... > M_y$, and $M_1, M_2$ to $M_y$ are all positive integers, and $y \geq 2$.

Fuel gas is introduced into the stack groups in series, and is introduced into the stacks in each stack group in parallel, so that the remaining fuel gas after a reaction in an upstream stack group flows into a downstream stack group for reaction. Two adjacent stack groups $D_{y-1}$ and $D_y$ are in fuel communication with each other through the respective third fuel channels. Fuel outlets of the stacks in the stack group $D_{y-1}$ are in communication with the third fuel channel through fuel exhaust branch pipes, so that fuel exhaust gas of the stacks in the upstream stack group merges in the third fuel channel. Fuel inlets of the stacks in the stack group $D_y$ are in communication with the third fuel channel through fuel inlet branch pipes, so that fuel in the third fuel channel is distributed into the stacks in the downstream stack group.

It should be emphasized that those skilled in the art can understand that each stack in the stack groups may be a multi-stage stack as described above, or may be an ordinary stack not having a multi-stage structure, for example, a stack formed by a plurality of cells connected in series in a stacked manner, and the type of the stack in the stack groups is not limited in the embodiments of the present disclosure. The fuel cell system can be applied to various types of stacks to meet diverse needs and performance optimization needs in different application scenarios.

Further, as an optional implementation, the number of stacks in each stack group and the stack group fuel utilization rate corresponding to each stack group satisfy the first stack number constraint condition, and the first stack number constraint condition is expressed as:

9

$$M_y = M_1 \times \prod_{j=1}^{y-1} (1 - \mu_j)$$

where $M_y$ represents a number of stacks in a $D_y{}^{th}$ stack group, $M_1$ represents a number of stacks in a $D_1{}^{th}$ stack group, $\mu_j$ represents a stack group fuel utilization rate corresponding to the $D_j{}^{th}$ stack group, $j$ and y are positive integers, and $j \in [1, y-1]$.

Assuming that the stack group fuel utilization rates corresponding to the stack groups $D_1$, $D_2$ to $D_y$ are respectively $\mu_1$, $\mu_2$ to $\mu_y$, the number $M_y$ of stacks in the $D_y{}^{th}$ stack group satisfies the following formula:

$$M_y = M_{y\text{-}1} \times (1 - \mu_{y\text{-}1})$$

According to the above formula, it can be further obtained that the number $M_y$ of stacks in the $D_y{}^{th}$ stack group satisfies the following formula (i.e., the first stack number constraint condition):

$$M_y = M_1 \times \prod_{j=1}^{y-1} (1 - \mu_j)$$

It should be noted that in the embodiment of the present disclosure, the design of the stack group fuel utilization rates of the stack groups to satisfy the first stack number constraint condition can automatically ensure that, during normal operation of the stack, the hydrogen-equivalent amount $A_0$ of fuel introduced to each stack of each stack group is equal, without requiring flow control using an active device.

Further, as an optional implementation, the number of stacks in each of the two adjacent stack groups and the stack fuel utilization rate corresponding to each stack in the upstream one of the two adjacent stack groups satisfy the second stack number constraint condition, and the second stack number constraint condition is expressed as:

$$M_y = M_{y-1} - \sum_{j=1}^{M_{y-1}} \delta_j$$

where $My$ represents a number of stacks in a $D_y{}^{th}$ stack group, $M_{y-1}$ represents a number of stacks in a $D_{y-1}{}^{th}$ stack group, $\delta_j$ represents a stack fuel utilization rate corresponding to a $j^{th}$ stack in the $D_{y-1}{}^{th}$ stack group, $j$ and y are positive integers, and $j \in [1, M_{y-1}]$.

Assuming that the $D_{y-1}{}^{th}$ stack group includes $M_{y-1}$ stacks, the fuel utilization rates corresponding to the stacks are respectively defined as $\delta_1$, $\delta_2$ to $\delta_{(My-1)}$, and the $D_y{}^{th}$ stack group includes $M_y$ stacks, $M_y$ satisfies the following formula (i.e., the second stack number constraint condition):

$$M_y = M_{y-1} - \sum_{j=1}^{M_{y-1}} \delta_j$$

It should be noted that in the embodiment of the present disclosure, the design of the numbers of stacks in a downstream stack group and the stack fuel utilization rates of the stacks in an upstream stack group to satisfy the second stack number constraint condition can automatically ensure that, during normal operation of the fuel cell system, the hydrogen-equivalent amount $A_0$ of fuel introduced per unit time to each stack is equal, without requiring flow control using an active device.

Further, as an optional implementation, a system fuel utilization rate corresponding to the fuel cell system and the stack group fuel utilization rate corresponding to each stack group satisfy a system fuel utilization rate constraint condition, and the system fuel utilization rate constraint condition is expressed as:

$$\mu_{Total} = \frac{\sum_{j=1}^{y} M_j \times \mu_j}{\sum_{j=1}^{y} M_j}$$

where $\mu_{Total}$ represents the system fuel utilization rate, $M_j$ represents a number of stacks in a $D_j^{th}$ stack group, $\mu_j$ represents the stack group fuel utilization rate corresponding to the $D_j^{th}$ stack group, $j$ and y are positive integers, and $j \in [1, y]$.

Assuming that the system fuel utilization rate corresponding to the fuel cell system is defined as $\mu_{Total}$ and the stack group fuel utilization rates corresponding to the stack groups $D_1$, $D_2$ to $D_y$ are respectively defined as $\mu_1$, $\mu_2$ to $\mu_y$, the system fuel utilization rate $\mu_{Total}$ satisfies the following formula (i.e., the system fuel utilization rate constraint condition):

$$\mu_{Total} = \frac{\sum_{j=1}^{y} M_j \times \mu_j}{\sum_{j=1}^{y} M_j}$$

It should be noted that when the system fuel utilization rate corresponding to the fuel cell system and the stack group fuel utilization rates of the stack groups satisfy the system fuel utilization rate constraint condition, it can be ensured that the stacks in the stack groups will not be overloaded, thereby prolonging the service life of the stacks, and maintaining a high utilization rate of the entire fuel cell system.

Further, as an optional implementation, the system fuel utilization rate satisfies $60\% \leq \mu_{Total} \leq 99\%$ or $70\% \leq \mu_{Total} \leq 95\%$, and the stack group fuel utilization rate corresponding to each stack group satisfies $30\% \leq \mu_y \leq 75\%$ or $50\% \leq \mu_y \leq 75\%$, where $\mu_y$ represents the stack group fuel utilization rate corresponding to a $D_y^{th}$ stack group, and y is a positive integer.

For example, the system fuel utilization rate corresponding to the fuel cell system is set to satisfy $60\% \leq \mu_{Total} \leq 99\%$ or $70\% \leq \mu_{Total} \leq 95\%$, so as to maximize the utilization of fuel within a range in which the system can operate stably and reduce the fuel consumption costs; and the stack group fuel utilization rates corresponding to the stack groups are set to satisfy $30\% \leq \mu_y \leq 75\%$ or $50\% \leq \mu_y \leq 75\%$, so as to optimize the allocation of the fuel utilization rates of the stack groups and improve the total fuel utilization rate and performance of the entire system.

It can be understood by those skilled in the art that the ranges specified for the system fuel utilization rate and the stack group fuel utilization rates corresponding to the stack groups can also be selected according to practical requirements.

Further, as an optional implementation, the number of stacks in each stack group satisfies a third stack number constraint condition, and the third stack number constraint condition is:

when the multi-stage fuel cell system includes a first-stage stack group and a second-stage stack group connected in series, a number of stacks in the first-stage stack group and a number of stacks in the second-stage stack group satisfy $M_1 : M_2$ being equal to one of 2:1, 3:1, 42:13, 39:12, or 4:1, where $M_1$ represents the number of stacks in the first-stage stack group, and $M_2$ represents the number of stacks in the second-stage stack group; or

when the multi-stage fuel cell system includes a first-stage stack group, a second-stage stack group, and a third-stage stack group connected in series, a number of stacks in the first-stage stack group, a number of stacks in the second-stage stack group, and a number of stacks in the third-stage stack group satisfy $M_1 : M_2 : M_3$ being equal to one of 9:3:1, 39:12:4, or 42:13:4, where $M_1$ represents the number of stacks in the first-stage stack group, $M_2$ represents the number of stacks in the second-stage stack group, and $M_3$ represents the number of stacks in the third-stage stack group.

Optionally, the fuel cell system in the embodiment of the present disclosure further includes a fuel replenishment channel arranged on the third fuel channel between two adjacent stack groups. When there is a fluctuation or failure in the operation of the fuel cell system, and the remaining fuel discharged from an upstream stack group cannot meet a requirement for ensuring that "when the hydrogen-equivalent amount $A_0$ of fuel introduced per unit time to each stack is equal" in a downstream stack group, the remaining fuel discharged from the upstream stack group can be mixed with supplemental fuel through the fuel replenishment channel and then flows together with the supplemental fuel into the downstream stack group.

Assuming that two adjacent stack groups are respectively $D_{y-1}$ and $D_y$, it can be determined based on the following formula whether supplemental fuel needs to be added to the $D_y{}^{th}$ stack group. When the following formula is satisfied, supplemental fuel is introduced to the fuel replenishment channel between the two stack groups $D_{y-1}$ and $Dy$ through control by the fuel cell system, and the supplemental fuel flows into the $D_y{}^{th}$ stack group together with the remaining fuel discharged from the $D_{y-1}{}^{th}$ stack group:

$$M_y > M_{y-1} \times (1 - \mu_{y-1})$$

where $\mu_{y-1}$ represents the stack group fuel utilization rate corresponding to the $D_{y-1}{}^{th}$ stack group.

Further, assuming that the stack group fuel utilization rates corresponding to the stack groups $D_1$, $D_2$ to $D_y$ are respectively $\mu_1$, $\mu_2$ to $\mu_y$, the number $M_y$ of stacks in the $D_y{}^{th}$ stack group satisfies the following formula:

$$M_y = M_{y-1} \times (1 - \mu_{y-1}) + \frac{Q_{y-1}}{A_0}$$

where $Q_{y-1}$ represents a hydrogen-equivalent amount of supplementary fuel introduced between the two adjacent stack groups $D_{y-1}$ and $Dy$ per unit time.

When y≥3, the above formula is transformed, and the number $M_y$ of stacks in the $D_y{}^{th}$ stack group satisfies the following formula:

$$M_y = \left[ M_1 \times \prod_{j=1}^{y-1}(1 - \mu_j) \right] + \left\{ \sum_{j=1}^{y-2}\left[ \frac{Q_j}{A_0} \times \prod_{k=j+1}^{y-1}(1 - \mu_k) \right] \right\} + \frac{Q_{y-1}}{A_0}$$

where $Q_j$ represents a hydrogen-equivalent amount of supplementary fuel introduced between the two adjacent stack groups $D_j$ and $D_{j+1}$ per unit time, $j$ and $k$ are positive integers, $j \in [1, y-1]$, and $k \in [2, y-1]$.

When y=2, y=2 is substituted into the above formula, and the number $M_2$ of stacks in the $D_2{}^{th}$ stack group satisfies the following formula:

$$M_2 = M_1 \times (1 - \mu_1) + \frac{Q_1}{A_0}$$

where $Q_1$ represents a hydrogen-equivalent amount of supplementary fuel introduced between the two adjacent stack groups $D_1$ and $D_2$ per unit time.

It should be noted that when the system needs to be replenished with fuel, the design of the numbers of stacks in two adjacent stack groups, the stack group fuel utilization rate of the upstream one of the two adjacent stack groups, and the hydrogen-equivalent amount of supplemental fuel to be introduced between the two adjacent stack groups to satisfy the above formulas can automatically ensure that the hydrogen-equivalent amount $A_0$ of fuel introduced per unit time to each stack is equal when the system is in abnormal operation, without requiring flow control using an active device.

Further, the hydrogen-equivalent amount $Q_j$ of the supplementary fuel satisfies the following formula (preferably, the formula is an equation):

$$Q_j \geq A_0 \times \left[ M_{j+1} - M_j \times (1 - \mu_j) \right]$$

Further, assuming that the $D_{y-1}{}^{th}$ stack group includes $M_{y-1}$ stacks, the stack fuel utilization rates corresponding to the stacks are respectively defined as $\delta_1$, $\delta_2$ to $\delta_{(My-1)}$, and the $D_y{}^{th}$ stack group includes $M_y$ stacks, the number $M_y$ of stacks in the $D_y{}^{th}$ stack group satisfies the following formula:

$$M_y = \frac{Q_{y-1}}{A_0} + M_{y-1} - \sum_{j=1}^{M_{y-1}} \delta_j$$

It should be noted that when the system needs to be replenished with fuel, the design of the numbers of stacks in two adjacent stack groups, the stack fuel utilization rates of the stacks in the upstream one of the two adjacent stack groups, and the hydrogen-equivalent amount of supplemental fuel to be introduced between the two adjacent stack groups to satisfy the above formulas can automatically ensure that, during abnormal operation of the system, the hydrogen-equivalent amount $A_0$ of fuel introduced per unit time to each stack is equal, without requiring flow control using an active device.

The fuel cell system of the embodiment of the present disclosure has been described above. It can be seen that compared with fuel cell systems in the prior art, in the present disclosure, fourth fuel channels of a plurality of stacks are connected in parallel to form a stack group, and third fuel channels of a plurality of stack groups are connected in series to form the fuel cell system, so that fuel exhaust gas discharged from an upstream stage flows into a downstream stage for reaction, thereby realizing the recycling of fuel, and improving the fuel utilization rate and the power generation efficiency. In addition, it is specified that the hydrogen-equivalent amount of fuel introduced per unit time to each stack is equal, thereby reducing the risk of over-utilization of individual stacks and improving the stability and reliability of operation of the system while effectively improving the fuel utilization rate and the power generation efficiency.

In some alternative embodiments, the functions/operations mentioned in the block diagram may not occur in the order mentioned in the diagram. For example, two blocks shown in succession may actually be executed substantially concurrently, and they may sometimes be executed in the reverse order, depending on the functions/operations involved. Furthermore, the embodiments presented and described as flowcharts in the present disclosure are provided by way of example to provide a more comprehensive understanding of the technology. The disclosed methods are not limited to the operations and logical flow presented herein. Alternative embodiments are contemplated in which the order of the various operations is altered and in which sub-operations described as being part of a larger operation are executed independently.

Furthermore, although the present disclosure is described in the context of functional modules, it should be understood that, unless otherwise stated, one or more of the functions and/or features may be integrated into a single physical device and/or software module, or one or more functions and/or features may be implemented in separate physical devices or software modules. It can also be understood that a detailed discussion of a practical implementation of each module is not necessary for understanding the present disclosure. Rather, the practical implementation of the module will be understood within the ordinary skill of an engineer, given the attributes, functions, and interrelationships of the various functional modules in the apparatus disclosed herein. Therefore, those skilled in the art will be able to implement the present disclosure set forth in the claims by using ordinary skills without undue experimentation. It can also be understood that the specific concepts disclosed are merely illustrative and are not intended to limit the scope of the present disclosure, which is determined by the full scope of the appended claims and their equivalents.

The function may be stored in a computer-readable storage medium if implemented in the form of a software functional unit and sold or used as an independent product. Based on such an understanding, the technical schemes of the present disclosure essentially, or the part contributing to the related art, or some of the technical schemes may be implemented in the form of a software product. The software product is stored in a storage medium, and includes several instructions for instructing a computer device (which may be a personal computer, a server, a network device, or the like) to execute all or some of the operations of the methods described in the embodiments of the present disclosure. The foregoing storage medium includes any medium that can store program code, such as a Universal Serial Bus (USB) flash drive, a removable hard disk, a Read-Only Memory (ROM), a Random Access Memory (RAM), a magnetic disk, or an optical disk.

The logic and/or steps represented in the flowchart or otherwise described herein, for example, may be considered as an ordered list of executable instructions for implementing logical functions, and may be embodied in any computer-readable medium, so as to be used by an instruction execution system, apparatus, or device (e.g., a computer-based system, a system including a processor, or other system that can acquire instructions and execute instructions from an instruction execution system, apparatus, or device), or used in conjunction with these instruction execution systems, apparatuses, or devices. In this specification, a "computer-readable medium" can be any apparatus that can contain, store, communicate, propagate, or transmit a program for use in an instruction execution system, apparatus, or device, or use in conjunction with the instruction execution system, apparatus, or device.

More specific examples (non-exhaustive list) of computer-readable media include the following: electrical connections (electronic devices) having one or more wires, portable computer disk cartridges (magnetic devices), RAM, ROM, Erasable Programmable Read-Only Memory (EPROM or flash memory), optical fiber devices, and portable Compact Disk Read-Only Memory (CD-ROM). In addition, the computer-readable medium may even be paper or other suitable medium on which the program can be printed, as the paper or other media may be optically scanned, for example, followed by editing, interpretation or, if necessary, other suitable processing means to electronically obtain the program which is then stored in a computer memory.

It should be understood that the parts of the present disclosure can be implemented in hardware, software, hardware, or a combination thereof. In the above embodiments, multiple operations or methods may be implemented by hardware or software stored in a memory and executed by a suitable instruction execution system. For example, if implemented by hardware, as in another embodiment, it can be implemented by any one or a combination of the following techniques well known in the art: a discrete logic circuit having logic gates for implementing logic functions on data signals, an Application-Specific Integrated Circuit (ASIC) with suitable combinational logic gates, a Programmable Gate Array (PGA), a Field Programmable Gate Array (FPGA), etc.

In the description of the specification, the description with reference to the terms "an embodiment/implementation," "another embodiment/implementation," "some embodiments/implementations," and so on means that specific features, structures, materials or characteristics described in connection with the embodiment or example are embraced in at least one embodiment or example of the present disclosure. In this specification, exemplary descriptions of the foregoing terms do not necessarily refer to the same embodiment or example. Moreover, the described specific features, structures, materials, or characteristics may be combined in any suitable manner in one or more embodiments.

Although the embodiments of the present disclosure have been shown and described, those having ordinary skills in the art should understand that various changes, modifications, replacements and variations may be made to the embodiments without departing from the principles and gist of the present disclosure, and the scope of the present disclosure is as defined by the appended claims and their equivalents.

Although some embodiments of the present disclosure have been described above, the present disclosure is not limited to the implementations described above. Those having ordinary skills in the art can make various equivalent modifications or replacements without departing from the protection scope of the present disclosure. Such equivalent modifications or replacements fall within the scope defined by the claims of the present disclosure.

Although some embodiments of the present disclosure have been described above, the present disclosure is not limited to the implementations described above. Those having ordinary skills in the art can make various equivalent modifications or replacements without departing from the protection scope of the present disclosure. Such equivalent modifications or replacements fall within the scope defined by the claims of the present disclosure.

## Claims

1. A multi-stage stack, comprising a plurality of cell arrays connected in series, first fuel channels, and second fuel channels, wherein each of the plurality of cell arrays comprises a plurality of cells connected in parallel, the plurality of cell arrays are in communication with each other through the respective first fuel channels, and the cells in a same cell array are connected through the respective second fuel channels; and wherein a number of cells in each cell array and an array fuel utilization rate corresponding to each cell array satisfy a first cell number constraint condition, a number of cells in each of two adjacent cell arrays and a cell fuel utilization rate corresponding to each cell in an upstream one of the two adjacent cell arrays satisfy a second cell number constraint condition, such that during stable operation of the stack, a hydrogen-equivalent amount of fuel introduced per unit time to each cell is equal.

2. The multi-stage stack of claim 1, wherein the number of cells in each cell array and the array fuel utilization rate corresponding to each cell array satisfy the first cell number constraint condition, and the first cell number constraint condition is expressed as:

$$N_x = N_1 \times \prod_{i=1}^{x-1} (1 - \eta_i)$$

wherein $N_x$ represents a number of cells in a $C_x^{th}$ cell array, $N_1$ represents a number of cells in a $C_1^{th}$ cell array, $\eta_i$ represents an array fuel utilization rate corresponding to the $C_i^{th}$ cell array, $i$ and $x$ are positive integers, and $i \in [1, x-1]$.

3. The multi-stage stack of claim 1, wherein the number of cells in each of the two adjacent cell arrays and the cell fuel utilization rate corresponding to each cell in an upstream one of the two adjacent cell arrays satisfy the second cell number constraint condition, and the second cell number constraint condition is expressed as:

$$N_x = N_{x-1} - \sum_{i=1}^{N_{x-1}} \gamma_i$$

wherein $Nx$ represents a number of cells in a $C_x^{th}$ cell array, $N_{x-1}$ represents a number of cells in a $C_{x-1}^{th}$ cell array, $\gamma_i$

represents a cell fuel utilization rate corresponding to an $i^{th}$ cell in the $C_{x-1}{}^{th}$ cell array, $i$ and $x$ are positive integers, and $i \in [1, N_{x-1}]$.

4. The multi-stage stack of claim 1, wherein the stack fuel utilization rate corresponding to the stack and an array fuel utilization rate corresponding to each cell array satisfy a stack fuel utilization rate constraint condition, and the stack fuel utilization rate constraint condition is expressed as:

$$\eta_{stack} = \frac{\sum_{i=1}^{x} N_i \times \eta_i}{\sum_{i=1}^{x} N_i}$$

wherein $\eta_{stack}$ represents the stack fuel utilization rate, $N_i$ represents a number of cells in a $C_i{}^{th}$ cell array, $\eta_i$ represents the array fuel utilization rate corresponding to the $C_i{}^{th}$ cell array, $i$ and $x$ are positive integers, and $i \in [1, x]$.

5. The multi-stage stack of claim 4, wherein the stack fuel utilization rate satisfies $60\% \le \eta_{stack} \le 99\%$ or $70\% \le \eta_{stack} \le 95\%$, and the array fuel utilization rate corresponding to each cell array satisfies $30\% \le \eta_x \le 75\%$ or $50\% \le \eta_x \le 75\%$, wherein $\eta_x$ represents the array fuel utilization rate corresponding to a $C_x{}^{th}$ cell array, and $x$ is a positive integer.

6. The multi-stage stack of claim 1, wherein the number of cells in each cell array satisfies a third cell number constraint condition, and the third cell number constraint condition is:

when the stack comprises a first-stage cell array and a second-stage cell array connected in series, a number of cells in the first-stage cell array and a number of cells in the second-stage cell array satisfy $N_1 : N_2$ being equal to one of 2:1, 3:1, 42:13, 39:12, or 4:1, wherein $N_1$ represents the number of cells in the first-stage cell array, and $N_2$ represents the number of cells in the second-stage cell array; or
when the stack comprises a first-stage cell array, a second-stage cell array, and a third-stage cell array connected in series, a number of cells in the first-stage cell array, a number of cells in the second-stage cell array, and a number of cells in the third-stage cell array satisfy $N_1 : N_2 : N_3$ being equal to one of 9:3:1, 39:12:4, or 42:13:4, wherein $N_1$ represents the number of cells in the first-stage cell array, $N_2$ represents the number of cells in the second-stage cell array, and $N_3$ represents the number of cells in the third-stage cell array.

7. A multi-stage fuel cell system, comprising a plurality of stack groups connected in series, third fuel channels, and fourth fuel channels, wherein each of the plurality of stack groups comprises a plurality of stacks connected in parallel, the plurality of stack groups are in communication with each other through the respective third fuel channels, and the stacks in a same stack group are connected through the respective fourth fuel channels; and wherein a number of stacks in each stack group and a stack group fuel utilization rate corresponding to each stack group satisfy a first stack number constraint condition, a number of stacks in each of two adjacent stack groups and a stack fuel utilization rate corresponding to each stack in an upstream one of the two adjacent stack groups satisfy a second stack number constraint condition, such that during stable operation of the fuel cell system, a hydrogen-equivalent amount of fuel introduced per unit time to each stack is equal.

8. The multi-stage fuel cell system of claim 7, wherein the number of stacks in each stack group and the stack group fuel utilization rate corresponding to each stack group satisfy the first stack number constraint condition, and the first stack number constraint condition is expressed as:

$$M_y = M_1 \times \prod_{j=1}^{y-1} (1 - \mu_j)$$

wherein $M_y$ represents a number of stacks in a $D_y{}^{th}$ stack group, $M_1$ represents a number of stacks in a $D_1{}^{th}$ stack group, $\mu_j$ represents a stack group fuel utilization rate corresponding to the $D_j{}^{th}$ stack group, $j$ and y are positive integers, and $j \in [1, y - 1]$.

9. The multi-stage fuel cell system of claim 7, wherein the number of stacks in each of the two adjacent stack groups and the stack fuel utilization rate corresponding to each stack in the upstream one of the two adjacent stack groups satisfy the second stack number constraint condition, and the second stack number constraint condition is expressed as:

$$M_y = M_{y-1} - \sum_{j=1}^{M_{y-1}} \delta_j$$

wherein $My$ represents a number of stacks in a $D_y{}^{th}$ stack group, $M_{y-1}$ represents a number of stacks in a $D_{y-1}{}^{th}$ stack group, $\delta_j$ represents a stack fuel utilization rate corresponding to a $j^{th}$ stack in the $D_{y-1}{}^{th}$ stack group, $j$ and y are positive integers, and $j \in [1, M_{y-1}]$.

10. The multi-stage fuel cell system of claim 7, wherein a system fuel utilization rate corresponding to the fuel cell system and the stack group fuel utilization rate corresponding to each stack group satisfy a system fuel utilization rate constraint condition, and the system fuel utilization rate constraint condition is expressed as:

$$\mu_{Total} = \frac{\sum_{j=1}^{y} M_j \times \mu_j}{\sum_{j=1}^{y} M_j}$$

wherein $\mu_{Total}$ represents the system fuel utilization rate, $M_j$ represents a number of stacks in a $D_j{}^{th}$ stack group, $\mu_j$ represents the stack group fuel utilization rate corresponding to the $D_j{}^{th}$ stack group, $j$ and y are positive integers, and $j \in [1, y]$.

11. The multi-stage fuel cell system of claim 10, wherein the system fuel utilization rate satisfies $60\% \leq \mu_{Total} \leq 99\%$ or $70\% \leq \mu_{Total} \leq 95\%$, and the stack group fuel utilization rate corresponding to each stack group satisfies $30\% \leq \mu_y \leq 75\%$ or $50\% \leq \mu_y \leq 75\%$, wherein $\mu_y$ represents the stack group fuel utilization rate corresponding to a $D_y{}^{th}$ stack group, and y is a positive integer.

12. The multi-stage fuel cell system of claim 7, wherein the number of stacks in each stack group satisfies a third stack number constraint condition, and the third stack number constraint condition is:

when the multi-stage fuel cell system comprises a first-stage stack group and a second-stage stack group connected in series, a number of stacks in the first-stage stack group and a number of stacks in the second-stage stack group satisfy $M_1 : M_2$ being equal to one of 2:1, 3:1, 42:13, 39:12, or 4:1, wherein $M_1$ represents the number of stacks in the first-stage stack group, and $M_2$ represents the number of stacks in the second-stage stack group; or

when the multi-stage fuel cell system comprises a first-stage stack group, a second-stage stack group, and a third-stage stack group connected in series, a number of stacks in the first-stage stack group, a number of stacks in the second-stage stack group, and a number of stacks in the third-stage stack group satisfy $M_1 : M_2 : M_3$ being equal to one of 9:3:1, 39:12:4, or 42:13:4, wherein $M_1$ represents the number of stacks in the first-stage stack group, $M_2$ represents the number of stacks in the second-stage stack group, and $M_3$ represents the number of stacks in the third-stage stack group.

**Stack**

Cell

Cell

⋮

Cell

Second fuel channel

Second fuel channel

Cell array

Fuel inlet

First fuel channel

Cell

Cell

⋮

Cell

Second fuel channel

Second fuel channel

Cell array

⋮

⋮

Cell

Cell

⋮

Cell

Second fuel channel

Second fuel channel

Cell array

Fuel outlet

FIG. 1

FIG. 2

# EP 4 776 356 A1

## INTERNATIONAL SEARCH REPORT

| | International application No. |
|---|---|
| | **PCT/CN2025/088538** |

### A. CLASSIFICATION OF SUBJECT MATTER

H01M 8/2484(2016.01)i; H01M 8/2457(2016.01)i; H01M 8/249(2016.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

DWPI, CNKI, CNABS, ENTXT, ENTXTC, CNTXT: 燃料电池, 气体利用率, 流路, 阵列, 电堆, 配比, fuel, cell, utilization, flow, path, array, system, air, ratio

### C. DOCUMENTS CONSIDERED TO BE RELEVANT

| Category* | Citation of document, with indication, where appropriate, of the relevant passages | Relevant to claim No. |
|---|---|---|
| PX | CN 119133552 A (CHAOZHOU THREE-CIRCLE (GROUP) CO., LTD.) 13 December 2024 (2024-12-13)<br>claims 1-12 | 1-12 |
| X | KR 20050064636 A (KOREA INSTITUTE OF ENERGY RESEARCH) 29 June 2005 (2005-06-29)<br>description, page 4, paragraph 5-page 8, paragraph 12 | 1-12 |

☐ Further documents are listed in the continuation of Box C.    ☑ See patent family annex.

| | |
|---|---|
| *  Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 May 2025** | **09 June 2025** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/088538**

| Patent document cited in search report | | | Publication date (day/month/year) | Patent family member(s) | | | Publication date (day/month/year) |
|---|---|---|---|---|---|---|---|
| CN | 119133552 | A | 13 December 2024 | CN | 119133552 | B | 25 April 2025 |
| KR | 20050064636 | A | 29 June 2005 | KR | 100506620 | B1 | 08 August 2005 |